# EUROPEAN PATENT APPLICATION

(11) **EP 4 814 536 A1**
(43) Date of publication of application: **30.09.2026**
(21) Application number: 24910889.5
(22) Date of filing: 18.12.2024
(51) Int. Cl.: G01S 7/484, G01S 7/4863, G01S 17/931

(54) **LIGHT EMITTING DEVICE, LIGHT SOURCE ARRAY, DETECTION DEVICE, LASER RADAR, AND TERMINAL**

(30) Priority: 27.12.2023 CN 202311834371
(71) Applicant: Yinwang Intelligent Technologies Co., Ltd., Shenzhen, Guangdong 518110 (CN)
(72) Inventor: ZHAO, Xinchao, Shenzhen, Guangdong 518129 (CN); DAI, Ruihong, Shenzhen, Guangdong 518129 (CN); ZHU, Yadan, Shenzhen, Guangdong 518129 (CN)
(74) Representative: Gill Jennings & Every LLP
(86) International application number: PCT/CN2024/140292
(87) International publication number: WO 2025/139958

(57) **Abstract**

A light emitting apparatus, a light source array, a detection apparatus, a lidar, and a terminal are used in the field of detection technologies. The light emitting apparatus includes a plurality of rows and a plurality of columns of light emitting chips. In one direction, light emitting regions of the plurality of columns of light emitting chips are sequentially arranged, and two adjacent columns of light emitting chips are spaced from each other. In another direction, the plurality of rows of light emitting chips are sequentially arranged, and edges of light emitting regions of two adjacent rows of light emitting chips are connected to each other or partially overlap. This application further correspondingly provides the light source array including the light emitting apparatus, the detection apparatus, the lidar, and the terminal. In this application, light emitting regions of N rows of light emitting chips have no gap in a second direction. Therefore, a light beam emitted by the light emitting apparatus has no gap in the second direction, so that an emission field of view is continuous, resolving a problem that there is a visual blind spot for light beams emitted by transmit ends of a plurality of lasers. In this application, continuous and blind spot-free detection can be further performed on an object in a field of view, enhancing detection performance.

## Description

This application claims priority to Chinese Patent Application No. 202311834371.5, filed with the China National Intellectual Property Administration on December 27, 2023 and entitled "LIGHT EMITTING APPARATUS, LIGHT SOURCE ARRAY, DETECTION APPARATUS, LIDAR, AND TERMINAL", which is incorporated herein by reference in its entirety.

### TECHNICAL FIELD

This application relates to the field of detection technologies, and in particular, to a light emitting apparatus, a light source array, a detection apparatus, a lidar, and a terminal.

### BACKGROUND

A lidar (Lidar) is a sensor that integrates a laser technology with a photoelectric conversion technology. A basic working principle of the lidar is as follows: A transmit end emits detection light to a detection region, and a receive end receives return light (or referred to as an echo) returned from the detection region, to obtain related information of a target in the detection region by using the return light. The information helps a device quick identify and make a decision on a surrounding object. The lidar is widely used in many fields such as intelligent vehicles, smart transportation, or surveying and mapping.

With continuous development of device intelligence, people have an increasingly high requirement for detection precision of the lidar. An increasing quantity of lidars use a plurality of lasers that are sequentially attached to form a transmit end, to increase a transmit power, thereby improving detection precision of the lidar. However, there is a housing of a specific thickness outside a light emitting surface as the lasers are usually separately encapsulated. The housing leads to a specific spacing between the lasers. When the transmit end emits detection light, a region corresponding to a gap between the lasers is a detection visual blind spot, which affects a device sensing coverage range. Especially when the lidar is used in a vehicle, a visual blind spot affects sensing of an obstacle, and further affects driving comfort and safety.

### SUMMARY

This application provides a light emitting apparatus, a light source array, a detection apparatus, a lidar, and a terminal, to implement dense or overlapping arrangement of light emitting regions of a light emitting chip, and implement a continuous emission field of view, thereby resolving a problem that there is a visual blind spot between light beams. In this application, incorporating the light emitting apparatus within the detection apparatus can enhance detection performance of the detection apparatus, while advancing an intelligence level of a device utilizing the detection apparatus.

**According to a first aspect,** this application provides a light emitting apparatus, including N rows and K columns of light emitting chips, where N and K are both integers, N≥2, and K≥2. In a first direction, light emitting regions of the K columns of light emitting chips are sequentially arranged, and two adjacent columns of light emitting chips are spaced from each other; and in a second direction, the N rows of the light emitting chips are sequentially arranged, and edges of light emitting regions of two adjacent rows of light emitting chips are connected to each other or partially overlap, where the first direction is different from the second direction.

In this application, edges of light emitting regions of two adjacent rows of light emitting chips are connected to each other or light emitting regions partially overlap, so that there is no gap between light emitting regions of the N rows of light emitting chips in the second direction. A light beam emitted by the light emitting apparatus has no gap in the second direction, so that a continuous emission field of view is implemented, resolving a problem that there is a visual blind spot between light beams. In this application, incorporating the light beam emitted by the light emitting apparatus is used to detect an object space, can implement continuous and blind-spot-free detection of an object in a field of view, enhance detection performance of the detection apparatus, significantly improve accuracy of a detection result while advancing an intelligence level of a device utilizing the detection apparatus.

In some solutions, the light emitting apparatus may be used in a scanning detection apparatus. The scanning detection apparatus scans a light beam in the first direction (that is, a scanning direction is the first direction), to implement field-of-view stitching in the first direction, so that the emission field of view is continuous and has no gap in both the first direction and the second direction. Light beam scanning can significantly expand the emission field of view and enhance detection performance.

**In a possible implementation of the first aspect,** the N rows of light emitting chips are configured to emit N linear light spots, and angular space edges of the N linear light spots are connected to each other or overlap in the second direction. In this way, the light beam emitted by the light emitting apparatus is a linear light beam, and the linear light beam is long in the second direction, so that a field of view of the light emitting apparatus in the second direction is wide. In addition, the linear light beam is easy to scan, so that a range of a field of view obtained through field-of-view stitching after scanning can be expanded.

**In another possible implementation of the first aspect,** light emitting regions of two adjacent rows of light emitting chips partially overlap, where in the second direction, lengths of overlapping regions between light emitting regions of any two adjacent rows of light emitting chips are the same. In this implementation, lengths of overlapping regions of light beams are uniform.

**In still another possible implementation of the first aspect,** in the second direction, lengths of overlapping regions between light emitting regions of at least two light emitting chip groups are different, and one light emitting chip group includes two adjacent rows of light emitting chips. In this implementation, lengths of overlapping regions of light beams may be non-uniform, to facilitate flexible design of energy density distribution of the light beam.

For example, the overlapping region between the light emitting regions of the light emitting chip is designed, so that an overlapping region of light beams in a region of interest (region of interest, ROI) is large, and an overlapping region of light beams in a non-ROI region is small. In this way, a light beam energy density in the ROI region can be increased, and a field of view of the light beam is ensured to be not significantly reduced.

**In still another possible implementation of the first aspect,** in the N rows of light emitting chips, emission time sequences of two adjacent rows of light emitting chips for emitting a light beam are different. In this application, because a spacing between two adjacent rows of light emitting chips is short, crosstalk is likely to occur. In the foregoing implementation, based on emission time sequences, emission time sequences of different rows of light emitting chips are different, so that crosstalk between partitions can be reduced and detection performance is improved.

**In still another possible implementation of the first aspect,** a light emitting region of each light emitting chip includes two sub-regions, and emission time sequences of the two sub-regions for emitting a light beam are different. This can reduce crosstalk between different sub-regions in the light emitting chip, and enhance detection performance.

**In still another possible implementation of the first aspect,** the two sub-regions include a first sub-region and a second sub-region that are arranged in the second direction, and the first sub-region and the second sub-region respectively face two ends in the second direction; and first sub-regions of light emitting regions of the N rows of light emitting chips are configured to emit a first light beam in a first time period, and the first sub-regions of the light emitting regions of the N rows of the light emitting chips are configured to emit the first light beam in a second time period, where the first time period is different from the second time period.

**In still another possible implementation of the first aspect,** the N rows of light emitting chips include 2×N sub-regions, 2×A sub-regions correspond to a maximum of 2×N emission time sequences, at least one sub-region emits light in each emission time sequence, and two sub-regions that belong to a same light emitting region do not emit a light beam in a same time sequence.

**In still another possible implementation of the first aspect,** in the second direction, a (3×i+1)^{th} sub-region emits light in a first time period, a (3×i+2)^{th} sub-region emits light in a second time period, and a (3×i+3)^{th} sub-region emits light in a third time period, where i is an integer in $\left[0, \frac{2 N}{3}-1\right]$.

**In still another possible implementation of the first aspect,** the two sub-regions of the light emitting region of each light emitting chip are isolated on a cathode or isolated on an anode. In the foregoing implementation, a same light emitting chip shares an anode or a cathode. Because a same chip has a smaller difference in permanence in terms of a voltage, a current, and a resistance, it is easier to maintain performance consistency during use. By dividing the light emitting chip into two sub-regions and implementing time-division light emission per sub-region, reliability and consistency can be better.

**In still another possible implementation of the first aspect,** K=2, drive regions of the K columns of light emitting chips are located on two sides of the light emitting regions of the K columns of light emitting chips, and the drive region of the light emitting chip is configured to drive the light emitting region of the light emitting chip to emit a light beam. In this way, in the light emitting apparatus, the drive regions are located on two sides, and the light emitting regions are located in the middle. This can reduce a mounting gap in the first direction, and is conducive to field-of-view stitching and point cloud stitching in the first direction.

**In still another possible implementation of the first aspect,** the light emitting region of the light emitting chip includes a plurality of light emitting points, the plurality of light emitting points are arranged in rows and columns, and two adjacent columns of light emitting points are interlaced with each other. In this way, the light emitting holes are interlaced with each other, thereby reducing a gap between the light emitting points, and increasing an energy density of the light beam.

Optionally, a length of an overlapping region between light emitting regions of two adjacent rows of light emitting chips is a length of (Q+0.5) light emitting points, where Q is an integer and Q≥0.

**In still another possible implementation of the first aspect,** the light emitting chip includes one or more of a vertical cavity surface emitting laser VCSEL, an edge emitting laser EEL, a photonic crystal surface emitting laser PCSEL, or a horizontal cavity surface emitting laser HCSEL.

**In still another possible implementation of the first aspect,** each column of the K columns of light emitting chips includes L light emitting chips; and centers of the L light emitting chips in each column of the K columns of light emitting chips overlap in the first direction.

**In another possible implementation of the first aspect,** centers of adjacent two rows of light emitting chips in the N columns of light emitting chips are spaced from each other in the first direction. Centers of adjacent two rows of light emitting chips in the N columns of light emitting chips are spaced from each other in the second direction.

According to a second aspect, this application provides a light source array. The light source array includes the light emitting apparatus described in any implementation of the first aspect. There may be one or more light emitting apparatuses included in the light source array. For ease of description, there are M light emitting apparatuses, where M is an integer and M≥1.

**In a possible implementation of the second aspect,** M≥2, and the M light emitting apparatuses are sequentially arranged in a first direction.

**In another possible implementation of the second aspect,** powers of at least two light emitting apparatuses are different.

**According to a third aspect,** this application provides a detection apparatus, including a transmitting module and a receiving module. The transmitting module includes the light emitting apparatus described in any implementation of the first aspect, or includes the light source array described in any implementation of the second aspect. The transmitting module is configured to transmit detection light, and the receiving module is configured to receive an echo of the detection light.

**In a possible implementation of the third aspect,** M≥2, and the M light emitting apparatuses are sequentially arranged in a first direction.

**In a possible implementation of the third aspect,** M≥2, the receiving module includes P array detectors, the P array detectors are separately configured to receive an echo of detection light emitted by one or more light emitting apparatuses, and P is a positive number and P≥2.

**In a possible implementation of the third aspect,** each of the P array detectors includes a plurality of photosensitive regions, and each of the plurality of photosensitive regions corresponds to a light emitting region of one light emitting chip in one light emitting apparatus.

**According to a fourth aspect,** this application provides a lidar, including the detection apparatus described in the third aspect.

**According to a fifth aspect,** this application provides a terminal, including the light emitting apparatus described in any implementation of the first aspect, the light source array described in any implementation of the second aspect, the detection apparatus described in the third aspect, or the lidar described in the fourth aspect. Optionally, the terminal includes an intelligent terminal or a transportation means like a vehicle, a robot, an uncrewed aerial vehicle, or a ship.

### BRIEF DESCRIPTION OF DRAWINGS

The following briefly describes accompanying drawings used in describing embodiments.
FIG. 1 is a diagram of a structure of a light emitting apparatus according to an embodiment of this application;
FIG. 2 is a diagram of a light spot of a light beam emitted by a light emitting apparatus according to an embodiment of this application;
FIG. 3 is a diagram of a field of view according to an embodiment of this application;
FIG. 4 is a diagram of region stitching of a point cloud according to an embodiment of this application;
FIG. 5 is a diagram of a length of an overlapping region between light emitting chips according to an embodiment of this application;
FIG. 6 is a diagram of an emission time sequence according to an embodiment of this application;
FIG. 7 is a diagram of a structure of another light emitting apparatus according to an embodiment of this application;
FIG. 8 is a diagram of light emitting regions isolated on a cathode according to an embodiment of this application;
FIG. 9 is a diagram of light emitting regions isolated on an anode according to an embodiment of this application;
FIG. 10 is a diagram of emission time sequences of a plurality of sub-regions shown in FIG. 7 according to an embodiment of this application;
FIG. 11 is a diagram of other emission time sequences of a plurality of sub-regions shown in FIG. 7 according to an embodiment of this application;
FIG. 12 is a diagram of other emission time sequences of a plurality of sub-regions shown in FIG. 7 according to an embodiment of this application;
FIG. 13 is a diagram of a structure of another light emitting apparatus according to an embodiment of this application;
FIG. 14 is a diagram of light emitting points of a light emitting apparatus according to an embodiment of this application;
FIG. 15 is a diagram of a structure of another light emitting apparatus according to an embodiment of this application;
FIG. 16 is a diagram of a structure of another light emitting apparatus according to an embodiment of this application;
FIG. 17 is a diagram of a light source array according to an embodiment of this application;
FIG. 18 is a diagram of another light source array according to an embodiment of this application;
FIG. 19 is a diagram of another light source array according to an embodiment of this application;
FIG. 20 is a diagram of another light source array according to an embodiment of this application;
FIG. 21 is a diagram of another light source array according to an embodiment of this application;
FIG. 22 is a diagram of a structure of a detection apparatus according to an embodiment of this application; and
FIG. 23 is a diagram of a structure of a detector according to an embodiment of this application.

### DESCRIPTION OF EMBODIMENTS

Some terms in this application are first described below. It should be noted that these explanations are for ease of understanding by a person skilled in the art, and are not intended to limit the protection scope claimed by this application.

A region of interest (region of interest, ROI) is a region that needs to be processed or needs to be concerned about and that is represented in a shape of a square box, a circle, an ellipse, or an irregular polygon in a detection region. The region of interest usually includes a detection target.

A light spot is a bright spot formed by a light beam, and is also referred to as energy density (or referred to as intensity or power) distribution of the light beam in angular space.

A point cloud is a cluster or a set of points. The point (also referred to as a target point or a data point) herein usually indicates a characteristic of a target. For example, the point indicates one or more of a location (for example, a one-dimensional, two-dimensional, or three-dimensional coordinate location), a distance, an angle, reflection intensity, color information, and the like.

The foregoing explanations of the terms may be applied to the following.

A detection apparatus uses a signal as a detection medium, and transmits a signal to a detection region (namely, an object space) and receives an echo of the signal, to implement detection of the detection region, for example, ranging, speed measurement, or azimuth measurement. A transmit end and a receive end are disposed in the detection apparatus. The transmit end is configured to transmit a signal, and the receive end is configured to receive the signal. The signal herein includes light, for example, laser light.

In some solutions, the transmit end includes a plurality of lasers that are sequentially attached, to increase a transmit power of a light beam. However, because of a housing of the laser, there is a gap between light beams emitted by the lasers that are sequentially attached, and a visual blind spot is easily formed at the gap, affecting a sensing result.

In view of this, this application provides a light emitting apparatus, a light source array, a detection apparatus, a lidar, and a terminal, to implement close arrangement or overlapping arrangement of light emitting regions of a light emitting chip, and implement a continuous emission field of view, thereby resolving a problem that there is a visual blind spot between light beams. In this application, incorporating the light emitting apparatus within the detection apparatus can enhance detection performance of the detection apparatus while advancing an intelligence level of a device utilizing the detection apparatus.

The following first describes the light emitting apparatus provided in this application.

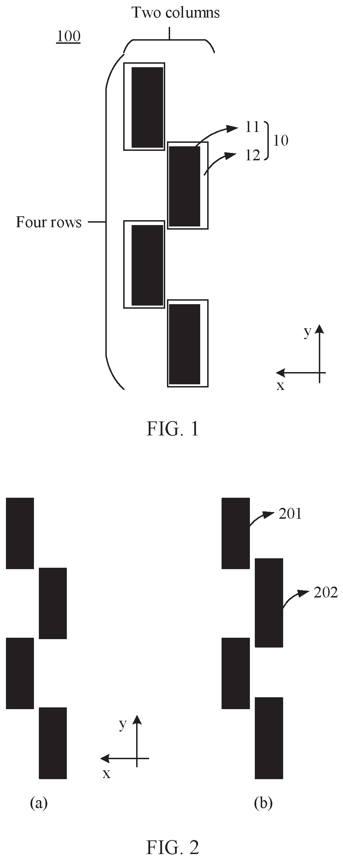

An embodiment of this application provides a light emitting apparatus, including N rows and K columns of light emitting chips, where N and K are both integers, N≥2, and K≥2. With reference to FIG. 1, a light emitting apparatus 100 includes four rows and two columns of light emitting chips 10. Each light emitting chip 10 includes a light emitting region 11. Each light emitting chip 10 further includes a housing 12 for encapsulation. The housing 12 is configured to encapsulate a circuit, an optical path, and/or the like of the light emitting chip. For example, a drive circuit (where a location at which the drive circuit is disposed may be referred to as a drive region) is disposed in the housing 12, and the drive circuit is configured to drive the light emitting region 11 to emit light.

In this embodiment of this application, in a first direction (for example, an X direction shown in FIG. 1), light emitting regions of the K columns of light emitting chips are sequentially arranged, and two adjacent columns of light emitting chips are spaced from each other. In a second direction (for example, a Y direction shown in FIG. 1), the N rows of light emitting chips are sequentially arranged, and edges of light emitting regions of two adjacent rows of light emitting chips are connected to each other or partially overlap. The first direction is different from the second direction. Optionally, the first direction is perpendicular to the second direction. With reference to FIG. 1, in the Y direction, edges of light emitting regions of a first row of light emitting chips and edges of light emitting regions of a second row of light emitting chips are connected to each other or partially overlap, edges of light emitting regions of the second row of light emitting chips and edges of light emitting regions of a third row of light emitting chips are connected to each other or partially overlap, and the rest rows are deduced by analogy, so that there is no gap between light emitting regions in the Y direction.

FIG. 2 is a diagram of a light spot of a light beam emitted by a light emitting apparatus according to this application. N rows of light emitting chips emit N linear light spots, and angular space edges of the N linear light spots are connected to each other in a second direction, as shown in (a) in FIG. 2. Alternatively, angular spaces of the N linear light spots overlap in the second direction, as shown in (b) in FIG. 2. Certainly, this application is also applicable to a case in which the two manners are combined. To be specific, edges of light emitting regions of some adjacent rows of light emitting chips are connected to each other, and light emitting regions of some adjacent rows of light emitting chips overlap.

Optionally, sizes and shapes of the N linear light spots may be the same or different. For example, in (b) in FIG. 2, a length of a light spot 202 is greater than a length of a light spot 201 in the second direction (namely, a Y direction).

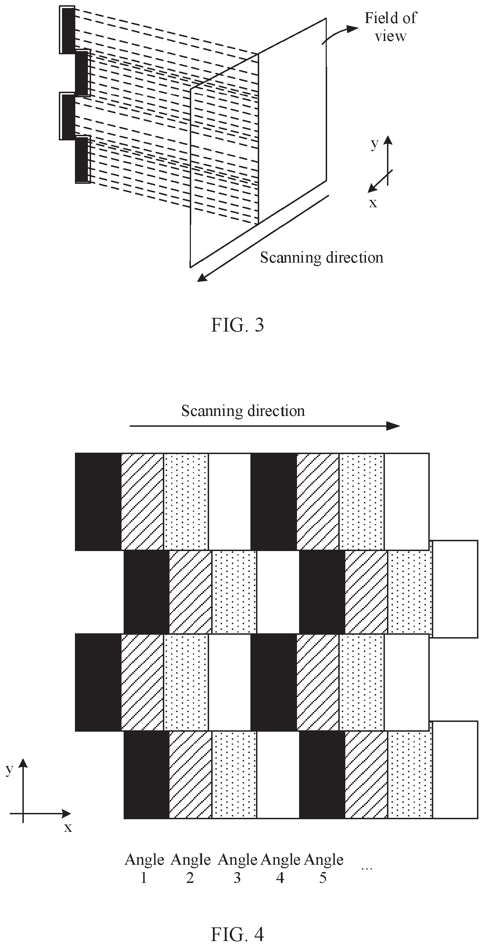

With reference to FIG. 2, the light beam emitted by the light emitting apparatus is a linear light beam obtained by stitching the N light spots. The linear light beam is long in the second direction, so that a field of view in the second direction is wide. In addition, the linear light beam is easy to scan, so that a range of a field of view obtained through field-of-view stitching after scanning can be expanded. In some solutions, the light emitting apparatus 100 is used in a scanning detection apparatus. The scanning detection apparatus scans a light beam in a first direction (that is, a scanning direction is the first direction), to implement field-of-view stitching in the first direction, so that an emission field of view is continuous and has no gap in both the first direction and the second direction. Light beam scanning can significantly expand the emission field of view and enhance detection performance. FIG. 3 is a diagram of a field of view according to an embodiment of this application. FIG. 4 is a diagram of region stitching of a point cloud according to an embodiment of this application. With reference to FIG. 3 and FIG. 4, a scanning direction is a short-side direction of the linear light beam, and corresponds to the first direction of the light emitting apparatus, namely, the X direction. As shown in FIG. 4, when a receive end of the detection apparatus sequentially receives echoes in the scanning direction, for example, receives echoes at a plurality of scanning angles, obtained regions of a point cloud are sequentially stitched in the first direction, to obtain a detection result in the entire field of view. A quantity of scanning angles shown in FIG. 4 is merely an example.

In a possible implementation, a spacing between edges of light emitting regions of each row of light emitting chips is small in the first direction, for example, the spacing is less than a first distance, to further reduce a registration degree during point cloud stitching and improve a point cloud stitching effect. In some solutions, the first distance is twice a distance between an outer edge of the light emitting chip and the light emitting region in the first direction. In other words, outer edges of two adjacent rows of light emitting units are closely adjacent to each other in the first direction, so that a distance between light emitting regions of two adjacent rows of light emitting units in the first direction is twice a distance between outer edges of the light emitting units and outer edges of the light emitting regions. In some other solutions, due to a design of a circuit or a consideration of avoiding crosstalk, the light emitting chips cannot be closely adjacent to each other. However, in this case, a spacing between the light emitting chips is not excessively long. For example, the first distance is less than three times a distance between an outer edge of the light emitting chip and the light emitting region in the first direction. Further, the first distance is less than 2.5 times the distance between the outer edge of the light emitting chip and the light emitting region in the first direction. For another example, the first distance is less than a length of the light emitting region in the first direction.

In a possible implementation, one light emitting chip includes one light emitting region. In other words, each light emitting region is epitaxially grown on one light emitting chip. Compared with a solution in which a plurality of light emitting regions are encapsulated into one entire light emitting chip, a solution in which one light emitting region is disposed on each light emitting chip can reduce a thermal load of a single light emitting chip, and improve reliability of the light emitting chip.

As mentioned above, the light emitting regions of the light emitting chips overlap in the second direction. In some solutions, the overlapping is uniform. In some other solutions, the overlapping is non-uniform. Uniformity means that lengths of overlapping regions between any two adjacent rows are consistent, and non-uniformity means that lengths of overlapping regions may be inconsistent. The following separately provides examples for description.

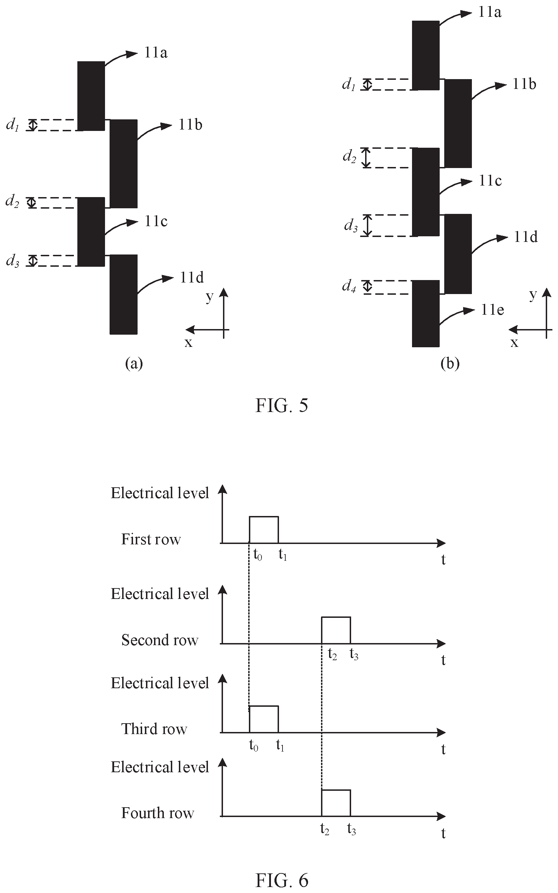

In an implementation solution of uniform overlapping, in the second direction, lengths of overlapping regions between light emitting regions of any two rows of adjacent light emitting chips are the same. Refer to (a) in FIG. 5. Light emitting regions of first to fourth rows of light emitting chips are sequentially represented as a light emitting region 11a, a light emitting region 11b, a light emitting region 11c, and a light emitting region 11d. In the Y direction, lengths of overlapping regions between the light emitting regions of the first to fourth rows of light emitting chips are sequentially represented as *d*₁, *d*₂, and *d*₃, where *d*₁, *d*₂, and *d*₃ are the same.

In an implementation solution of non-uniform overlapping, in the second direction, lengths of overlapping regions between light emitting regions of at least two light emitting chip groups are different, and one light emitting chip group includes two adjacent rows of light emitting chips. Refer to (b) in FIG. 5. Light emitting regions of first to fourth rows of light emitting chips are sequentially represented as a light emitting region 11a, a light emitting region 11b, a light emitting region 11c, a light emitting region 11d, and a light emitting region 11e. In the Y direction, lengths of overlapping regions between the light emitting regions of the first to fourth rows of light emitting chips are sequentially represented as *d*₁, *d*₂, *d*₃, and *d*₄. The first row of light emitting chips and the second row of light emitting chips may be considered as one light emitting chip group, and an overlapping length of light emitting regions of the one light emitting chip group is *d*₁. The second row of light emitting chips and the third row of light emitting chips may be considered as another light emitting chip group, and an overlapping length of light emitting regions of the another light emitting chip group is *d*₂. *d*₁ is different from *d*₂. Certainly, in the case of non-uniform overlapping, lengths of overlapping regions of some light emitting chip groups may be the same. For example, *d*₂ and *d*₃ may be the same.

In the foregoing solution, non-uniform overlapping of the light emitting regions facilitates a flexible design of energy density distribution of a light beam. In a possible example, the overlapping regions between the light emitting regions of the light emitting chips are designed, so that overlapping regions of light beams in a region of interest (region of interest, ROI) are large. As shown in (b) in FIG. 5, both *d*₂ and *d*₃ are greater than *d*₁ and *d*₄. In this way, in the second direction, an energy density in the center part of an emission field of view is high. Because a sensing result in the center part of the field of view has a high value, the center part of the field of view is usually designed as the ROI region. Therefore, the design of the overlapping region can increase light beam energy density in the ROI region, to correspondingly improve ROI detection precision. Further, in a non-ROI region, overlapping regions of light beams are designed to be small, to ensure that a field of view of the light beam is not significantly reduced.

In a possible implementation, in the N rows of light emitting chips, emission time sequences of two adjacent rows of light emitting chips for emitting a light beam are different. FIG. 6 is a diagram of an emission time sequence according to an embodiment of this application. A first row of light emitting chips emits a light beam in a time period from *t*₀ to *t*₁, and a second row of emitting light beams emits a light beam in a time period from *t*₂ to *t*₃. With reference to FIG. 1, it can be learned that because a distance between the first row of light emitting chips and the second row of light emitting chips is short, the first row of light emitting chips and the second row of light emitting chips are disposed to work in different time sequences, so that mutual crosstalk between the first row of light emitting chips and the second row of light emitting chips can be reduced.

Optionally, two non-adjacent rows of light emitting chips may be in a working state at the same time. With reference to FIG. 6, an emission time sequence of a third row of light emitting chips is the same as that of the first row of light emitting chips, and an emission time sequence of a fourth row of light emitting chips is the same as that of the second row of light emitting chips. In this way, detection efficiency can be ensured while crosstalk is reduced.

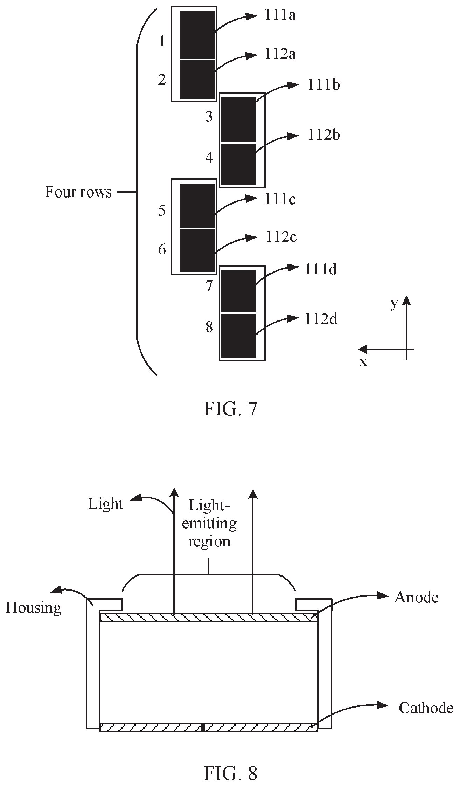

In a possible implementation, some or all of the light emitting chips include a plurality of sub-regions. The plurality of sub-regions herein may be two or more sub-regions. FIG. 7 is a diagram of a structure of another light emitting apparatus according to an embodiment of this application. A light emitting region of each light emitting chip in the light emitting apparatus includes two sub-regions, which may be referred to as a first sub-region and a second sub-region for ease of differentiation. Light emitting regions of a first row of light emitting chips each include a first sub-region 111a and a second sub-region 112a, light emitting regions of a second row of light emitting chips each include a first sub-region 111b and a second sub-region 112b, light emitting regions of a third row of light emitting chips each include a first sub-region 111c and a second sub-region 112c, and light emitting regions of a fourth row of light emitting chips each include a first sub-region 111d and a second sub-region 112d. For ease of description below, the sub-regions are sequentially numbered as sub-regions 1, 2, 3, 4, 5, 6, 7, and 8 in a vertical direction (namely, a Y-axis negative direction).

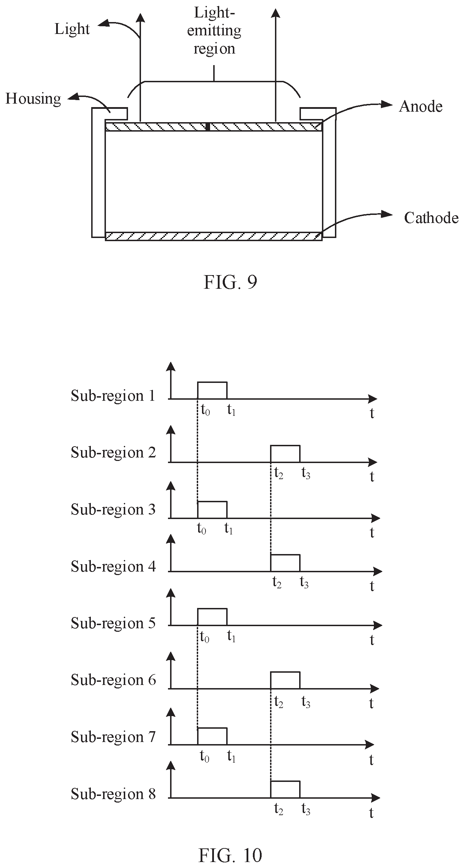

In a possible implementation, two sub-regions belong to a same light emitting region, and the two sub-regions are not completely separated in hardware, but share some materials. The two sub-regions may be isolated on a cathode or an anode. FIG. 8 is a diagram of cathode isolation. The light emitting region of the light emitting chip includes a cathode and an anode, and a plurality of optical material layers or conductive material layers are disposed between the cathode and the anode. A light emitting element in the light emitting chip, for example, a VCSEL, is used as an example. A P type-distributed Bragg reflector (P type-distributed Bragg reflector, P-DBR), an oxidation layer (oxidation layer), a multi-quantum well (multi-quantum well, MQW), a passivation layer (passivation layer), an N type-distributed Bragg reflector (N type-distributed Bragg reflector, N-DBR), a substrate (substrate), and the like may be disposed between the cathode and the anode. During isolation, the light emitting region may be provided with an isolation zone on the cathode. In this case, two sub-regions of the light emitting region share the anode. FIG. 9 is a diagram of anode isolation. The light emitting region may be provided with an isolation zone on the anode. In this case, two sub-regions of the light emitting region share the cathode.

In still another possible design, different sub-regions of one light emitting region may be independently controlled for emission. In one aspect, working is performed per sub-region, so that a working current of each light emitting region can be reduced, and reliability can be improved. In another aspect, light emitting is performed per sub-region, so that fields of view can be interlaced more finely, thereby improving a point cloud stitching effect.

In a possible implementation, emission time sequences of adjacent sub-regions in a plurality of sub-regions of a light emitting region of one light emitting chip are different. Two sub-regions are used as an example. If a light emitting region of each light emitting chip includes two sub-regions, emission time sequences of the two sub-regions for emitting light beams are different. The following lists several possible designs.

Design 1: The two sub-regions include a first sub-region and a second sub-region that are arranged in a first direction, and the first sub-region and the second sub-region respectively face two ends in the first direction. First sub-regions of light emitting regions of the N rows of light emitting chips are configured to emit a first light beam in a first time period, and the first sub-regions of the light emitting regions of the N rows of the light emitting chips are configured to emit the first light beam in a second time period, where the first time period is different from the second time period. With reference to FIG. 7, in each light emitting region, a sub-region facing a positive direction of a second direction is the first sub-region, to be specific, sub-regions 1, 3, 5, and 7 are the first sub-regions, and a sub-region facing a negative direction of the second direction is the second sub-region, to be specific, sub-regions 2, 4, 5, and 8 are the second sub-regions. FIG. 10 is a diagram of emission time sequences of a plurality of sub-regions shown in FIG. 7 according to an embodiment of this application. Sub-regions 1, 3, 5, and 7 emit light beams in a time period from *t*₀ to *t*₁, and sub-regions 2, 4, 5, and 8 emit light beams in a time period from *t*₂ to *t*₃. In this way, a granularity of time-division light emission can be more finely controlled, thereby reducing crosstalk between light emitting sub-regions while improving detection precision.

Design 2: The N rows of light emitting chips include 2×N sub-regions, 2×A sub-regions correspond to a maximum of 2×N emission time sequences, at least one sub-region emits light in each emission time sequence, and two sub-regions that belong to a same light emitting region do not emit a light beam in a same time sequence.

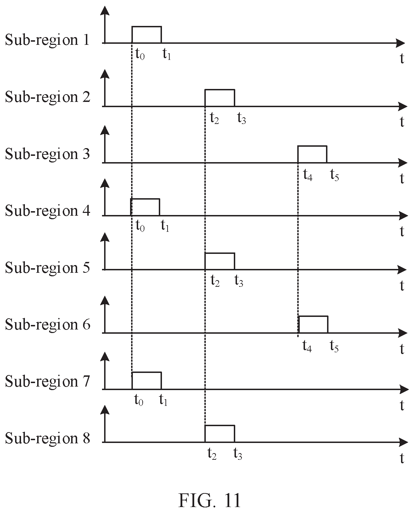

For example, in the second direction, a (3×i+1)^{th} sub-region emits light in a first time period, a (3×i+2)^{th} sub-region emits light in a second time period, and a (3×i+3)^{th} sub-region emits light in a third time period, where i is an integer in [0, $\left[0, \frac{2 N}{3}-1\right]$]. FIG. 11 is a diagram of other emission time sequences of a plurality of sub-regions shown in FIG. 7 according to an embodiment of this application. Sub-regions 1, 4, and 7 emit light beams in a time period from *t*₀ to *t*₁, sub-regions 2, 5, and 8 emit light beams in a time period from *t*₂ to *t*₃, and sub-regions 3 and 6 emit light beams in a time period from *t*₄ to *t*₅. In this way, a granularity of time-division light emission can be more finely controlled, thereby reducing crosstalk between light emitting sub-regions while improving detection precision.

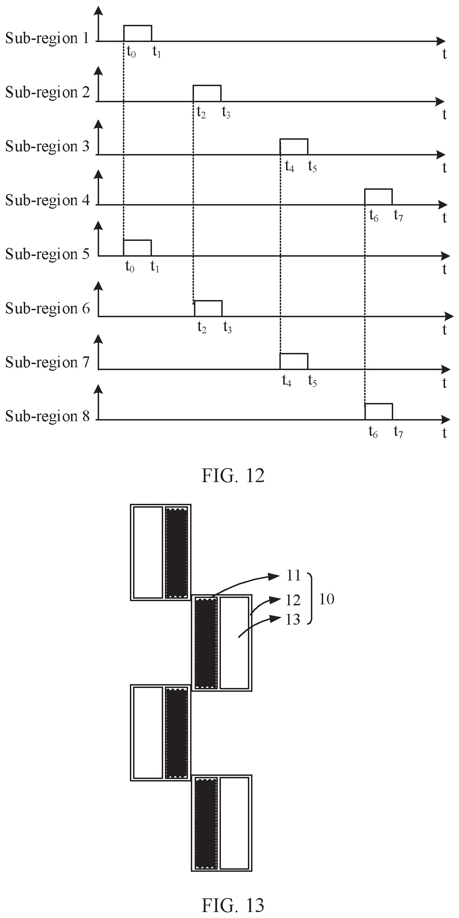

For another example, in the second direction, a (4×i+1)^{th} sub-region emits light in a first time period, a (4×i+2)^{th} sub-region emits light in a second time period, a (4×i+3)^{th} sub-region emits light in a third time period, and a (4×i+4)^{th} sub-region emits light in a third time period, where i is an integer in $\left[0, \frac{2 N}{4}-1\right]$. FIG. 12 is a diagram of other emission time sequences of a plurality of sub-regions shown in FIG. 7 according to an embodiment of this application. Sub-regions 1 and 5 emit light beams in a time period from *t*₀ to *t*₁, sub-regions 2 and 6 emit light beams in a time period from t₂ to *t*₃, sub-regions 3 and 7 emit light beams in a time period from *t*₄ to *t*₅, and sub-regions 4 and 8 emit light beams in a time period from *t*₆ to *t*₇*.* In this way, a granularity of time-division light emission can be more finely controlled, thereby reducing crosstalk between light emitting sub-regions while improving detection precision.

Certainly, this application is also applicable to a case in which more emission time sequences are set. For example, for eight sub-regions, eight emission time sequences may be set, and one sub-region emits one light beam in each time period.

In a possible implementation, the light emitting apparatus includes two columns of light emitting chips, that is, K=2. Drive regions of the two columns of light emitting chips are located on two sides of light emitting regions of the two columns of light emitting chips, and the drive region of the light emitting chip is configured to drive the light emitting region of the light emitting chip to emit a light beam. FIG. 13 is a diagram of a structure of another light emitting apparatus according to an embodiment of this application. Each light emitting chip further includes a drive region 13. For two columns of light emitting chips, drive regions of the two columns of light emitting chips are located on two sides, and light emitting regions are located in the middle, to reduce a mounting gap in a first direction. This facilitates field-of-view stitching and point cloud stitching in the first direction.

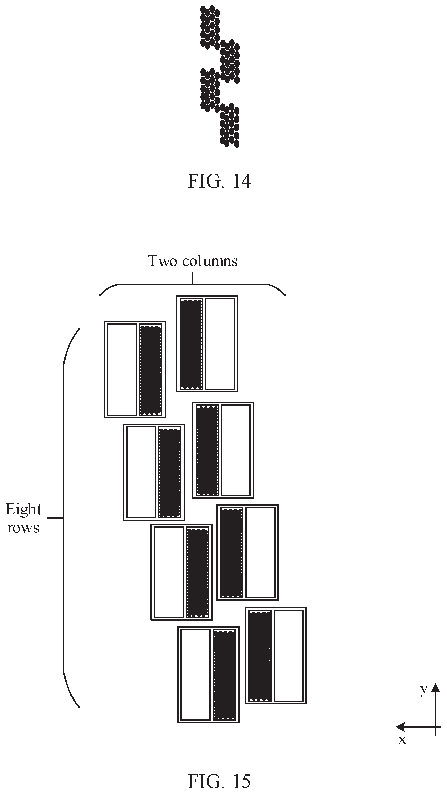

In a possible implementation, the light emitting region of the light emitting chip includes a plurality of light emitting points (or referred to as light emitting holes). FIG. 14 is a diagram of light emitting points of a light emitting apparatus according to an embodiment of this application. With reference to FIG. 1, FIG. 13, and FIG. 14, each light emitting region includes a plurality of light emitting points (namely, black ellipses shown in FIG. 14), the plurality of light emitting points are arranged in rows and columns, and adjacent columns of light emitting points are interlaced with each other. The light emitting holes are interlaced, so that a gap between light emitting points can be reduced, and energy density of an emitted light beam can be improved.

Optionally, a plurality of light emitting points in a same light emitting region may work together. For example, the plurality of light emitting points are driven by one drive chip to emit light at the same time, to increase a transmit power. Further, when one light emitting region includes a plurality of sub-regions, a plurality of light emitting points in one sub-region may work together, and are driven by one drive chip at the same time.

Optionally, a length of an overlapping region between light emitting regions of two adjacent rows of light emitting chips is a length of (Q+0.5) light emitting points, where Q is an integer and Q≥0. In this way, in a light beam overlapping region, centers of the light emitting points are interlaced in a second direction, to further increase an energy density of the overlapping region.

In a possible implementation, the light emitting chip includes one or more of a VCSEL, an EEL, a PCSEL, or an HCSEL. For example, the light emitting chip includes a plurality of VCSELs, and one VCSEL may be used as one light emitting point shown in FIG. 14. For another example, the light emitting chip includes a plurality of VCSELs and a plurality of PCSELs.

In a possible implementation, each column of the K columns of light emitting chips includes L light emitting chips, where L is an integer, and L≥1. Centers of the L light emitting chips in each column of the K columns of light emitting chips overlap in the first direction. For example, with reference to FIG. 1, each column of two columns of light emitting chips includes four light emitting chips. In the X direction, centers of four light emitting chips in a first column overlap, and centers of four light emitting chips in a second column also overlap.

In a possible implementation, each column of the K columns of light emitting chips includes L light emitting chips; and centers of the L light emitting chips in each column of the K columns of light emitting chips are spaced from each other in the first direction. For example, with reference to FIG. 15, the light emitting apparatus includes eight rows and two columns of light emitting chips. Each column of the two columns of light emitting chips includes four light emitting chips. In the X direction, centers of four light emitting chips in a first column are spaced from each other, and centers of four light emitting chips in a second column are also spaced from each other. In the X direction, drive regions of the two columns of light emitting chips still are located on two sides of the light emitting region.

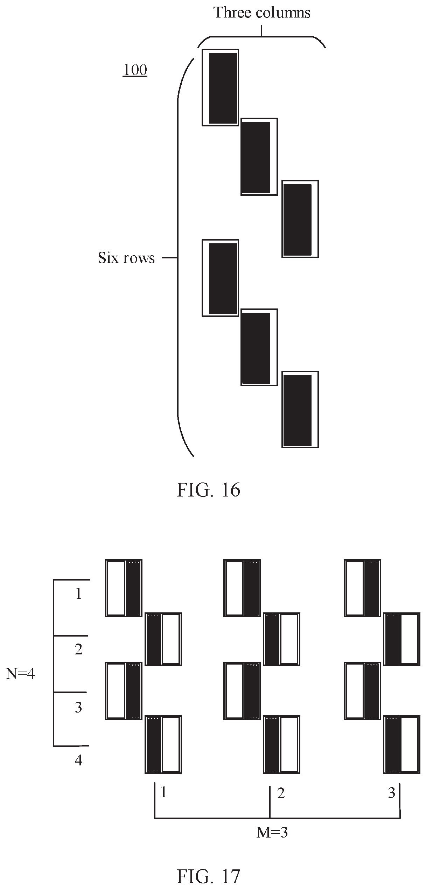

It should be understood that some implementations of this application are described by using an example in which a quantity of columns is 2. In some implementations, a quantity of columns of light emitting chips may be greater. As shown in FIG. 16, the light emitting apparatus may include six rows and three columns of light emitting chips. In addition, embodiments of this application and possible implementations thereof may be combined. A combination case is not described one by one herein again.

An embodiment of this application further provides a light source array. The light source array includes the foregoing light emitting apparatus, for example, the light emitting apparatus described in the embodiments in FIG. 1, FIG. 13, FIG. 15, or FIG. 16 and the possible implementations thereof. In some solutions, because one light emitting apparatus includes N rows and K columns of light emitting chips, one light emitting apparatus is also referred to as one group of light emitting chips.

In a possible implementation, the light source array may include one or more of the foregoing light emitting apparatuses. For ease of description, a quantity of light emitting apparatuses included in the light source array is set to M in this specification, where M is an integer and M≥1.

In a possible implementation, M≥2, and the M light emitting apparatuses are sequentially arranged in a first direction. FIG. 17 is a diagram of a light source array according to an embodiment of this application. The light source array includes three light emitting apparatuses (or three groups of light emitting chips), and each light emitting apparatus includes four rows of light emitting chips. The three light emitting apparatuses are arranged in a first direction (namely, the X direction shown in FIG. 1).

In a possible implementation, powers of at least two light emitting apparatuses are different. With reference to FIG. 17, a transmit power of a first light emitting apparatus is different from a power of a second light emitting apparatus. Further, voltage adjustment can be separately performed on the M groups of light emitting chips, to control the light emitting chips to output optical pulses with different powers. In this way, high-power and low-power transmit functions can be implemented by using hardware redundancy, and resolution can be improved. For example, some light emitting apparatuses transmit high-power pulses to perform long-distance high-precision detection, and some light emitting apparatuses transmit low-power pulses to detect an object at a short distance. In this way, long-distance detection and short-distance detection can be combined, and accuracy of a detection result can be improved.

The plurality of possible implementations of the light emitting apparatus in the foregoing may also be applied to the light source array. For example, in FIG. 17, edges of light emitting regions of two adjacent rows of light emitting chips are connected to each other. Further, the embodiment shown in FIG. 17 may be combined with one or more of the foregoing possible implementations. In an example of combination, in the light source array shown in FIG. 17, a first row and a third row of each light emitting apparatus simultaneously emit a light beam, and a second row and a fourth row simultaneously emit a light beam in another time sequence. In this way, crosstalk between adjacent sub-regions can be reduced. For related descriptions, refer to the foregoing possible implementations.

The following continues to describe several light source arrays provided in embodiments of this application with reference to the accompanying drawings.

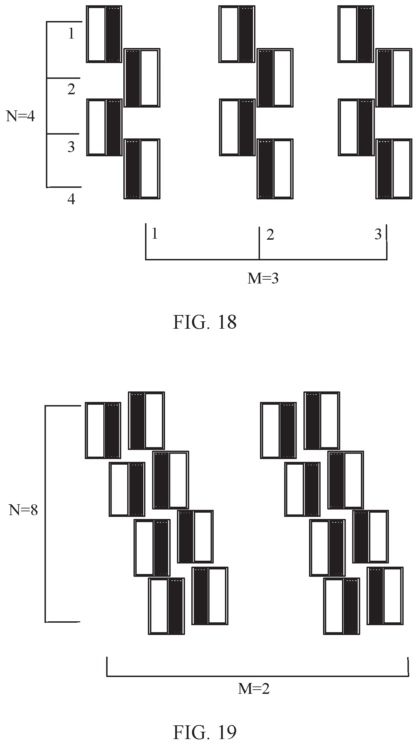

FIG. 18 is a diagram of another light source array according to an embodiment of this application. The light source array includes three groups of light emitting chips. The three groups of light emitting chips are arranged in a first direction. Each group of light emitting chips includes four rows of light emitting chips, and light emitting regions of two adjacent rows of light emitting chips overlap. The overlapping is uniform or non-uniform.

FIG. 19 is a diagram of another light source array according to an embodiment of this application. The light source array includes two groups of light emitting chips. The two groups of light emitting chips are arranged in a first direction. Each group of light emitting chips includes eight rows of light emitting chips, and light emitting regions of two adjacent rows of light emitting chips overlap. The overlapping is uniform or non-uniform.

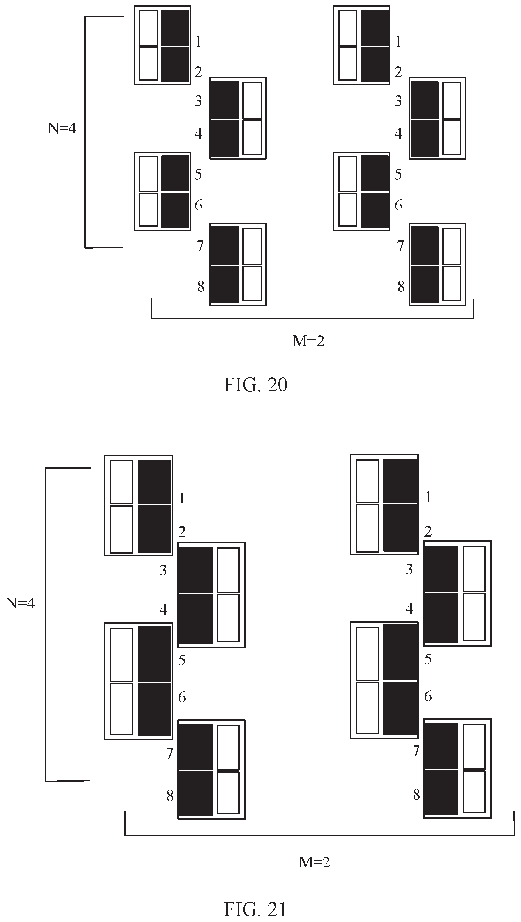

FIG. 20 is a diagram of another light source array according to an embodiment of this application. The light source array includes two groups of light emitting chips. The two groups of light emitting chips are arranged in a first direction. Each group of light emitting chips includes eight rows of light emitting chips, and edges of light emitting regions of two adjacent rows of light emitting chips are connected to each other. Each light emitting chip includes a first sub-region and a second sub-region. The first sub-region and the second sub-region are arranged in a second direction. When a light beam is emitted, emission time sequences of two sub-regions in each light emitting region are different. For related descriptions, refer to related descriptions in FIG. 10 to FIG. 12.

FIG. 21 is a diagram of another light source array according to an embodiment of this application. The light source array includes two groups of light emitting chips, the two groups of light emitting chips are arranged in a first direction, and each group of light emitting chips includes eight rows of light emitting chips. Light emitting regions of two adjacent rows of light emitting chips overlap, and the overlapping is uniform or non-uniform. Each light emitting chip includes a first sub-region and a second sub-region. The first sub-region and the second sub-region are arranged in a second direction. When a light beam is emitted, emission time sequences of two sub-regions in each light emitting region are different. For related descriptions, refer to related descriptions in FIG. 10 to FIG. 12.

It should be understood that, in FIG. 17 to FIG. 21, an example in which M groups of light emitting arrays are light emitting apparatuses with a same arrangement is used for description. In specific implementation, arrangement manners of a plurality of light emitting apparatuses included in the light source array may be different. For example, for a light source array including two light emitting apparatuses, how a first light emitting apparatus is arranged is shown in FIG. 13, and how a second light emitting apparatus is arranged is shown in FIG. 15.

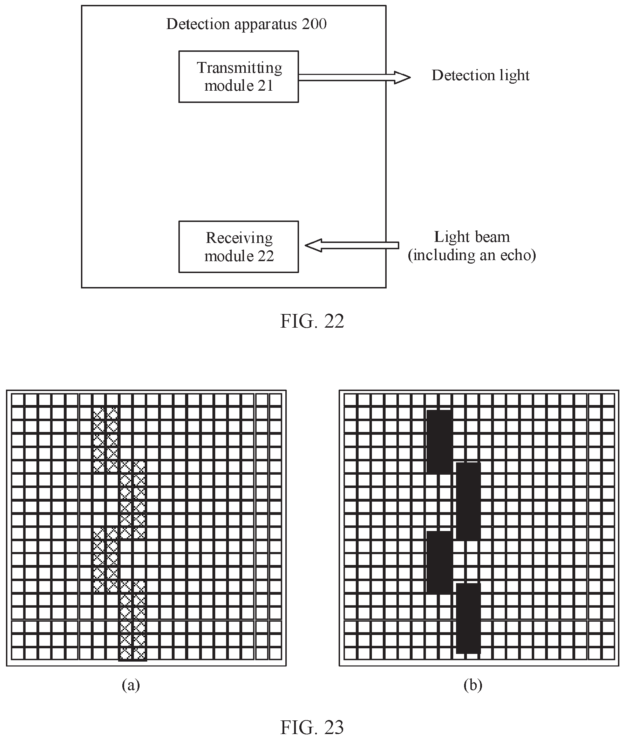

An embodiment of this application further provides a detection apparatus. With reference to FIG. 22, the detection apparatus 200 includes a transmitting module 21 and a receiving module 22. The transmitting module 21 is configured to transmit detection light, and the receiving module 22 is configured to receive an echo of the detection light. The transmitting module includes the foregoing light emitting apparatus or light source array.

In a possible implementation, the receiving module includes a detector. Further, the detector includes one or more of the following detection units: a single-photon avalanche diode (single-photon avalanche diode, SPAD), a silicon photomultiplier (Silicon photomultiplier, SiPM), a multi-pixel photon counter (multi-pixel photon counter, MPPC), a semiconductor avalanche photo diode (avalanche photo detector, APD), a "positive-intrinsic-negative" (positive-intrinsic-negative, PIN) diode (or referred to as a P-type semiconductor-doped-N-type semiconductor diode), or the like. When the detector includes a plurality of detection units, the plurality of detection units may be arranged in an array to form an array detector. For example, the receiving module includes an SPAD array detector.

In a possible implementation, the detection apparatus 200 further includes a transmitting optical system. The transmitting optical system includes one or more optical elements, including one or more of optical elements such as a lens, a superlens, a reflector, a filter, an optical diffuser, a polarizer, or a wave plate. Optionally, the transmitting optical system may be integrated into the transmitting module 21.

In a possible implementation, the receiving module may further include a receiving optical system, including one or more of optical elements such as a lens, a superlens, a reflector, a filter, an optical diffuser, a polarizer, or a wave plate. Optionally, the receiving optical system may be integrated into the receiving module 22.

In a possible implementation, when the detection apparatus 200 includes a plurality of light emitting apparatuses, the receiving module 21 of the detection apparatus 200 may include P detectors. Each detector is configured to receive an echo of a light beam emitted by one or more light emitting apparatuses. P is a positive number, and P≥2.

For example, the transmitting module 21 of the detection apparatus includes a light source array shown in FIG. 19. The light source array includes two light emitting apparatuses. In this case, the receiving module 22 may include two SPAD array detectors. Each SPAD array detector is configured to receive an echo of detection light emitted by one light emitting apparatus. Optionally, the two SPADs may share one receiving optical system, or may use one receiving optical system respectively.

In a possible implementation, the detector includes a plurality of photosensitive regions. Each photosensitive region is configured to receive an echo of a light beam emitted by one light emitting region in one light emitting apparatus. Further, each of the P array detectors includes one or more photosensitive regions, and each photosensitive region corresponds to a light emitting region of one light emitting chip in one light emitting apparatus.

As shown in (a) in FIG. 23, the detector includes a plurality of detection units arranged in an array, each photosensitive region includes some of the plurality of detection units, and the detection units in the photosensitive region are in a working state. As shown in (b) in FIG. 23, a light spot of an echo of a light beam emitted by the light source array may fall into the photosensitive region of the detector, and each photosensitive region may receive an echo of a light beam emitted by one light emitting region. It should be understood that a size of the photosensitive region shown in FIG. 23 and a quantity of detection units included in the photosensitive region are merely examples, and other designs may be used in a specific implementation.

In a possible implementation, the detection apparatus 200 further includes a scanning module. The scanning module is configured to: scan detection light emitted by the transmitting module 21 to a detection region, and provide a light beam (including an echo) from the detection region to the receiving module 22. Further, the scanning module includes one or more of a galvanometer scanner, a rotator mirror (polygon), a micro-electro-mechanical system (micro-electro-mechanical system, MEMS) mirror, a metal oscillating mirror, or the like. In some solutions, the scanning module may include one or more reflective surfaces. The reflective surface may be mounted on a main body of the scanning module in a patch form, or the reflective surface of the scanning module and the main body of the scanning module may be integrated. Optionally, a scanning manner of the scanning module may be one-dimensional scanning, two-dimensional scanning, or the like.

This application further provides a lidar. The lidar includes the foregoing light emitting apparatus, the foregoing light source array, or the foregoing detection apparatus.

An embodiment of this application further provides a terminal. The terminal includes the foregoing light emitting apparatus, the foregoing light source array, the foregoing detection apparatus, or the foregoing lidar.

Optionally, the terminal may be an intelligent terminal or a transportation means like a vehicle, an uncrewed aerial vehicle, or a robot, or the terminal may be industrial equipment. It should be understood that the terminal in this application may include an intelligent terminal or a transportation means like a vehicle, a robot, an uncrewed aerial vehicle, or a ship. The vehicle is a vehicle in a broad sense, and may be a transportation means (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), agricultural equipment (for example, a lawn mower or a harvester), or the like. For another example, the robot may be a robot like an automated guided vehicle (automated guided vehicle, AGV), a walkable conversation robot, or a service robot. The industrial equipment is, for example, an industrial robot or a robotic arm. An entertainment device is, for example, a virtual reality (virtual reality, VR) device, a mixed reality (mixed reality, MR) device, or a 4D cinema cockpit.

Optionally, there are a plurality of possible implementations of a mounting position of the detection apparatus. For example, the detection apparatus is mounted on a platform of a dashboard of the vehicle, or is mounted on a top of a cockpit, or may be mounted on one or more of a head of the vehicle, a side of the vehicle, a tail of the vehicle, or the like.

In the descriptions of this application, orientation or location relationships indicated by the terms "center", "upper", "lower", "vertical", "horizontal", "inside", "outside", "side", and the like are orientation or location relationships based on the accompanying drawings, and are merely intended for ease of describing this application and simplifying description, but does not indicate or imply that an indicated apparatus or element needs to have a specific orientation or needs to be construed and operated in a specific orientation. Therefore, such terms should not be understood as a limitation on this application. It should be understood that the Z direction, the Y direction, the X direction, and the like mentioned in some embodiments of this application are referred to by using an XYZ rectangular coordinate system, to facilitate description of features in this solution, instead of indicating or implying that a specified apparatus or element needs to have a specific orientation and be constructed and operated in a specific orientation.

In embodiments of this application, a term like "example" or "for example" is used to give an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a related concept in a specific manner.

"At least one" in embodiments of this application means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, the first sub-region and the second sub-region are merely used to describe different sub-regions in an implementation, and do not indicate different importance degrees, structures, materials, or the like of the sub-regions.

## Claims

1. A light emitting apparatus, wherein the light emitting apparatus comprises N rows and K columns of light emitting chips, N and K are both integers, N≥2, and K≥2;
in a first direction, light emitting regions of the K columns of light emitting chips are sequentially arranged, and two adjacent columns of light emitting chips are spaced from each other; and
in a second direction, the N rows of light emitting chips are sequentially arranged, and edges of light emitting regions of two adjacent rows of light emitting chips are connected to each other or partially overlap, wherein
the first direction is different from the second direction.

2. The light emitting apparatus according to claim 1, wherein the N rows of light emitting chips are configured to emit N linear light spots, and angular space edges of the N linear light spots are connected to each other or overlap in the second direction.

3. The light emitting apparatus according to claim 1 or 2, wherein light emitting regions of two adjacent rows of light emitting chips partially overlap; and
in the second direction, lengths of overlapping regions between light emitting regions of any two adjacent rows of light emitting chips are the same; or
in the second direction, lengths of overlapping regions between light emitting regions of at least two light emitting chip groups are different, and one light emitting chip group comprises two adjacent rows of light emitting chips.

4. The light emitting apparatus according to any one of claims 1 to 3, wherein in the N rows of light emitting chips, emission time sequences of two adjacent rows of light emitting chips for emitting a light beam are different.

5. The light emitting apparatus according to any one of claims 1 to 4, wherein a light emitting region of each light emitting chip comprises two sub-regions, and emission time sequences of the two sub-regions for emitting a light beam are different.

6. The light emitting apparatus according to claim 5, wherein the two sub-regions comprise a first sub-region and a second sub-region that are arranged in the first direction, and the first sub-region and the second sub-region respectively face two ends in the first direction; and
first sub-regions of light emitting regions of the N rows of light emitting chips are configured to emit a first light beam in a first time period, and the first sub-regions of the light emitting regions of the N rows of the light emitting chips are configured to emit the first light beam in a second time period, wherein the first time period is different from the second time period.

7. The light emitting apparatus according to claim 5, wherein the N rows of light emitting chips comprise 2 × N sub-regions, 2 × A sub-regions correspond to a maximum of 2 × N emission time sequences, at least one sub-region emits light in each emission time sequence, and two sub-regions that belong to a same light emitting region do not emit a light beam in a same time sequence.

8. The light emitting apparatus according to claim 7, wherein in the second direction, a (3 × i + 1)^{th} sub-region emits light in a first time period, a (3 × i + 2)^{th} sub-region emits light in a second time period, and a (3 × i + 3)^{th} sub-region emits light in a third time period, wherein i is an integer in $\left[0, \frac{2 N}{3}-1\right]$.

9. The light emitting apparatus according to any one of claims 5 to 8, wherein the two sub-regions of the light emitting region of each light emitting chip are isolated on a cathode or isolated on an anode.

10. The light emitting apparatus according to any one of claims 1 to 9, wherein K=2, drive regions of the K columns of light emitting chips are located on two sides of the light emitting regions of the K columns of light emitting chips, and the drive region of the light emitting chip is configured to drive the light emitting region of the light emitting chip to emit a light beam.

11. The light emitting apparatus according to any one of claims 1 to 10, wherein the light emitting region of the light emitting chip comprises a plurality of light emitting points, the plurality of light emitting points are arranged in rows and columns, and two adjacent columns of light emitting points are interlaced with each other.

12. The light emitting apparatus according to any one of claims 1 to 11, wherein the light emitting chip comprises one or more of a vertical cavity surface emitting laser VCSEL, an edge emitting laser EEL, a photonic crystal surface emitting laser PCSEL, or a horizontal cavity surface emitting laser HCSEL.

13. The light emitting apparatus according to any one of claims 1 to 12, wherein each column of the K columns of light emitting chips comprises L light emitting chips, L is an integer, and L≥1; and
centers of the L light emitting chips in each column of the K columns of light emitting chips overlap in the first direction.

14. The light emitting apparatus according to any one of claims 1 to 12, wherein each column of the K columns of light emitting chips comprises L light emitting chips, L is an integer, and L≥1; and
centers of the L light emitting chips in each column of the K columns of light emitting chips are spaced from each other in the first direction.

15. A light source array, wherein the light source array comprises M light emitting apparatuses according to any one of claims 1 to 14, M is an integer, and M≥1.

16. The light source array according to claim 15, wherein M≥2, and the M light emitting apparatuses are sequentially arranged in a first direction.

17. The light source array according to claim 15 or 16, wherein powers of at least two light emitting apparatuses are different.

18. A detection apparatus, wherein the detection apparatus comprises a transmitting module and a receiving module, the transmitting module comprises M light emitting apparatuses according to any one of claims 1 to 14, or comprises the light source array according to any one of claims 15 to 17, M is an integer, and M≥1; and
the transmitting module is configured to transmit detection light, and the receiving module is configured to receive an echo of the detection light.

19. The detection apparatus according to claim 18, wherein M≥2; and
the receiving module comprises P array detectors, the P array detectors are separately configured to receive an echo of detection light emitted by one or more light emitting apparatuses, P is a positive number, and P≥2.

20. The detection apparatus according to claim 19, wherein each of the P array detectors comprises a plurality of photosensitive regions, and each of the plurality of photosensitive regions corresponds to a light emitting region of one light emitting chip in one light emitting apparatus.

21. A lidar, wherein the lidar comprises the detection apparatus according to any one of claims 18 to 20.

22. A terminal, wherein the terminal comprises the light emitting apparatus according to any one of claims 1 to 14, or comprises the light source array according to any one of claims 15 to 17, or comprises the detection apparatus according to any one of claims 18 to 20, or comprises the lidar according to claim 21.
